**Europäisches Patentamt**

**European Patent Office**

**Office européen des brevets**

(19)

(11) Veröffentlichungsnummer : **0 462 476 B1**

## (12) EUROPÄISCHE PATENTSCHRIFT

(45) Veröffentlichungstag der Patentschrift :
**15.12.93 Patentblatt 93/50**

(51) Int. Cl.$^5$ : **C08G 69/16**

(21) Anmeldenummer : **91109416.7**

(22) Anmeldetag : **08.06.91**

(54) **Verfahren zur kontinuierlichen Herstellung von Polycaprolactam mit geregeltem Aminoendgruppengehalt.**

(30) Priorität : **21.06.90 DE 4019780**

(43) Veröffentlichungstag der Anmeldung :
**27.12.91 Patentblatt 91/52**

(45) Bekanntmachung des Hinweises auf die Patenterteilung :
**15.12.93 Patentblatt 93/50**

(84) Benannte Vertragsstaaten :
**BE CH DE FR GB IT LI NL**

(56) Entgegenhaltungen :
**EP-A- 0 020 946**
**EP-A- 0 074 025**
**EP-A- 0 348 821**

(73) Patentinhaber : **BASF Aktiengesellschaft**
**Carl-Bosch-Strasse 38**
**D-67063 Ludwigshafen (DE)**

(72) Erfinder : **Matthies, Paul, Dr.**
**Truebnerstrasse 59**
**W-6900 Heidelberg (DE)**

## Beschreibung

Polycaprolactam für Faserzwecke wird in der Regel durch Polymerisation von Caprolactam unter Mitverwendung von Kettenreglern wie Essigsäure, Propionsäure oder Benzoesäure hergestellt, um das Molekulargewicht des Polyamids auf einen gewünschten Wert zu begrenzen und die Viskositätsstabilität der Polyamidschmelze bei der Verarbeitung zu gewährleisten. Kettenregler haben außerdem die Funktion, den Endgruppengehalt des Polyamids, insbesondere den Gehalt an Aminoendgruppen, auf einen gewünschten Wert einzustellen. Ein definierter konstanter Aminoendgruppengehalt ist bei der Herstellung von Fasern aus Polyamiden erforderlich, damit eine definierte gleichmäßige Anfärbung sichergestellt wird.

Aus der US-PS 3 386 967 ist bekannt, daß man Caprolactam in einem mehrstufigen Verfahren unter Zusatz von 0,1 bis 0,7 Mol-% an Dicarbonsäuren wie Adipinsäure, Pimelinsäure, Sebacinsäure, Dodecandisäure oder aromatischen Dicarbonsäuren wie Terephthalsäure unter Erhalt eines Polycaprolactams mit einem mittleren Molekulargewicht von 25 000 bis 40 000 polymerisiert. Dieses Verfahren hat jedoch den Nachteil, daß man Polycaprolactam erhält, das beim schmelzspinnen unerwünschte Knotenbildung zeigt, wie aus der US-PS 3 839 530 bekannt ist. Deshalb werden entsprechend der letztgenannten US-PS Dicarbonsäureester als Kettenregler verwendet. Dicarbonsäureester sind jedoch leichter flüchtig, so daß ein konstanter Gehalt an Kettenreglern schwer aufrecht zu erhalten ist.

Die wichtigsten Anforderungen bei der großtechnischen Herstellung von Polyamid 6 sind: Wirtschaftlichkeit des Herstellverfahrens und einwandfreie Verarbeitbarkeit der erhaltenen Produkte.

Eine Aufgabe der vorliegenden Erfindung ist es demgemäß, die Raum-Zeit-Ausbeute bei der Polymerisation von Caprolactam in einem kontinuierlichen Verfahren zu erhöhen, ohne daß sich die Produkteigenschaften in unerwünschter Weise verändern. Die Raum-Zeit-Ausbeute kommt bei gegebener Polymerisationsanlage im Durchsatz und im Extraktgehalt des Produktes zum Ausdruck. Der Extraktgehalt ist dabei ein Maß für den Umsatz.

Für einige Einsatzgebiete wird Polycaprolactam mit vermindertem Aminoendgruppengehalt gewünscht, so für Produkttypen, die nach dem Differential-dyeing-Verfahren zusammen mit anderen Produkttypen gefärbt werden sollen, ferner für Produkttypen, die eine verminderte Anschmutzbarkeit aufweisen sollen, wie dies etwa bei auf dem Teppichsektor eingesetzten Fasern verlangt wird. Es ist zwar grundsätzlich möglich, den Aminoendgruppengehalt durch Erhöhung der Konzentration der üblicherweise als Kettenregler verwendeten Monocarbonsäuren zu vermindern; dies hat aber normalerweise eine unerwünschte Verringerung des erzielbaren Molekulargewichts und/oder der Raum-Zeit-Ausbeute zur Folge.

Eine weitere Aufgabe der vorliegenden Erfindung ist es demgemäß, Polycaprolactam mit vermindertem Aminoendgruppengehalt herzustellen, ohne daß es zu einer Verrringerung von Molekulargewicht und/oder Raum-Zeit-Ausbeute kommt.

Diese Aufgaben werden gelöst in einem Verfahren zur Herstellung von Polycaprolactam mit geregeltem Aminoendgruppengehalt, bei dem man Caprolactam in Gegenwart von Wasser als Initiator unter Mitverwendung von Dicarbonsäuren bei einer Temperatur von 240 bis 290°C polymerisiert, dadurch gekennzeichnet, daß man Caprolactam in einer Stufe unter Zusatz von 0,3 bis 5 Gew.-% Wasser und 0,1 bis 0,6 Gew.-% Terephthalsäure und/oder Isophthalsäure, jeweils bezogen auf Caprolactam, unter einem über die gesamte Polymerisationszeit einheitlichen Druck von 1,0 bis 1,9 bar, gemessen in der Dampfphase über der Polymerisationszone, unter Aufrechterhaltung eines Wassergehalts von 0,1 bis 0,5 Gew.-% polymerisiert, bis die Summe der Werte an Amino- und Carboxylendgruppen 115 bis 150 meq/kg beträgt mit der Maßgabe, daß der Aminoendgruppengehalt 25 meq/kg, jeweils gemessen am extrahierten Polycaprolactam, nicht unterschreitet.

Das neue Verfahren hat den Vorteil, daß es mit hoher Raumzeitausbeute verläuft und die Herstellung eines Polyamids mit einem für Faserzwecke geeigneten gleichmäßigen Aminoendgruppengehalt und Molekulargewicht ermöglicht. Ferner hat das neue Verfahren den Vorteil, daß das so hergestellte Polycaprolactam keine störenden Gelanteile enthält, die bei der Herstellung von Filamenten zu Verdickungen und anderen Störungen führen würden.

Die Polymerisation von Caprolactam wird in einer einzigen Stufe vorzugsweise in einer senkrechtstehenden Polymerisationszone durchgeführt. Geeignete Vorrichtungen werden beispielsweise beschrieben in den DE-ASen 24 48 100, 14 95 198 und in der EP-B 20 946. Die Polymerisation wird unter Zusatz von 0,3 bis 5 Gew.-% Wasser, insbesondere 0,5 bis 3 Gew.-% Wasser als Initiator und 0,1 bis 0,6, insbesondere 0,2 bis 0,5 Gew.-% Terephthalsäure und/oder Isophthalsäure, jeweils bezogen auf Caprolactam, durchgeführt. Zweckmäßig führt man ein Gemisch der vorgenannten Ausgangsstoffe dem Kopf der Polymerisationszone zu, wobei für eine innige Durchmischung mit polymerisierender Schmelze gesorgt wird.

Ein wesentliches Merkmal der Erfindung ist es, daß die Polymerisation unter einem einheitlichen Druck von 1,0 bis 1,9, insbesondere 1,0 bis 1,7 bar, gemessen in der Dampfphase über der Polymerisationszone, durchgeführt wird, unter Aufrechterhaltung eines Wassergehalts von 0,1 bis 0,5, insbesondere, 0,1 bis 0,4 Gew.-% Wasser in der Schmelze. Es vesteht sich, daß die oben in die Reaktionszone eingeführte überschüssige Wassermenge in Abhängigkeit vom angewandten Druck fortlaufend abdestilliert wird, um den vorgenannten Wassergehalt einzuhalten.

Die Polymerisation wird bei einer Temperatur von 240 bis 290°C durchgeführt. Die Polymerisationsdauer beträgt in der Regel 8 bis 12 Stunden. Es wird solange polymerisiert, bis die Summe der Amino- und Carboxylendgruppen 115 bis 150 meq/kg beträgt mit der Maßgabe, daß der Wert für Aminoendgruppen 25 meq/kg nicht unterschreitet. Vorteilhaft beträgt der Aminoendgruppengehalt 30 bis 60 meq/kg. Polycaprolactam wird der Polymerisationszone, zweckmäßig am unteren Ende, entnommen.

Der Amino- und Carboxylgruppengehalt wird am extrahierten Polycaprolactam gemessen. Die analytische Extraktion wird wie folgt durchgeführt:

100 Gew.-Teile Polycaprolactam werden mit 400 Gew.-Teilen vollentsalztem Wasser von 100°C für eine Dauer von 32 Stunden extrahiert und nach Entfernen des Wassers milde, d.h. ohne Nachkondensation, bei einer Temperatur von 100°C für eine Zeitdauer von 20 Stunden im Vakuum getrocknet.

Die Bestimmung des Endgruppengehaltes wird als acidimetrische Titration durchgeführt. Die Aminogruppen werden in Phenol/Methanol 70 : 30 (Gew.-Teile) als Lösungsmittel mit Perchlorsäure titriert. Die Carboxylendgruppen werden in Benzylalkohol als Lösungsmittel mit Kalilauge titriert. Die relative Viskosität RV des Polycaprolactams wird in 1 gew.-%iger Lösung in 96 gew.-%iger Schwefelsäure bei 25°C bestimmt. In den nachfolgenden Beispielen sind Prozentwerte bei Mengenangaben als Gewichtsprozente, bezogen auf das eingesetzte Caprolactam zu verstehen.

Das Verfahren nach der Erfindung sei an folgenden Beispielen veranschaulicht.

Im folgenden bedeuten

A:     Aminoendgruppengehalt
C:     Carboxylendgruppengehalt
RV:    relative Viskosität

Beispiele

Beispiel 1

Als Polymerisationsreaktor wurde ein VK-Rohr mit mechanisch durchmischter erster Reaktionszone nach EP 20 946 verwendet. Das VK-Rohr hatte ein Füllvolumen von 340 l und wurde mit einem Wärmeträgeröl beheizt.

Geschmolzenes Caprolactam mit einem Gehalt von 0,5 Gew.-% Wasser und 0,24 Gew.-% Terephthalsäure als Kettenregler wurde dem VK-Rohr bei einem Überdruck von 0,5 bar in der ersten Reaktionszone kontinuierlich unter Rühren zugeführt (s. Tab. 1). Der Durchsatz betrug 38 kg/h. Die Temperatur der ersten Reaktionszone betrug 270°C. Die in weiteren Reaktionszonen freiwerdende Polymerisationswärme wurde durch entsprechende Kühlung mit innenliegenden Wärmetauschern abgeführt. Die Temperatur der letzten Reaktionszone betrug 265°C. Das Produkt hatte einen Extraktgehalt von 11,0 %. Nach der Extraktion betrug die Rel. Viskosität RV 2,51, der Aminoendgruppengehalt A 46 meq/kg und die Summe A + C 123 meq/kg. Nach der betrieblichen, mit Nachkondensation verbundenen Trocknung betrug RV: 2,72; A: 37 meq/kg und A + C: 106 meq/kg.

Das Produkt wurde auf einer Schmelzspinnanlage versponnen und in einem getrennten Arbeitsgang auf einen Titer von 44f9 dtex verstreckt. Die Spinngeschwindigkeit betrug 900 m/min. Die Spulausbeute beim Spinnen betrug 100 %. Bei einem Streckverhältnis von 3,38 : 1 lag die Streckausbeute bei 96 %. Die Fadenfestigkeit betrug 5,42 cN/dtex bei einer Bruchdehnung von 36 %. Es wurden 1,10 Dickstellen pro km und 0,053 Schärfehler pro 100 km Fadenlänge gefunden.

Vergleichsbeispiel A

Ein Vergleichsversuch nach dem Stand der Technik wurde mit 0,15 Gew.-% Propionsäure als Kettenregler durchgeführt (s. Tab. 1). Zur Erzielung von mit Beispiel 1 vergleichbaren Werten des Extraktgehaltes und der Rel. Viskosität mußte der Durchsatz auf 26 kg/h reduziert und die Temperatur der ersten Reaktionszone auf 280°C erhöht werden. Im übrigen wurde der Versuch wie in Beispiel 1 durchgeführt. Das Produkt hatte einen Extraktgehalt von 11,8 %. Nach der Extraktion betrug RV: 2,53. Nach der betrieblichen Trocknung betrug RV: 2,72 und A: 37 meq/kg. Die Spulausbeute beim Spinnen, das Streckverhältnis und die Streckausbeute hatten die gleichen Werte wie in Beispiel 1. Die Fadenfestigkeit war mit 5,23 cN/dtex bei 35 % Dehnung etwas ungünstiger als im erfindungsgemäßen Beispiel 1.

Die Zahl der Dickstellen lag mit 1,06/km auf dem gleichen Niveau wie in Beispiel 1. Die Zahl der Schärfehler war mit 0,067/100 km gegenüber Beispiel 1 erhöht.

Beispiel 1 und Vergleichsbeispiel A zeigen, daß der Durchsatz in der Polymerisation mit Terephthalsäure als Kettenregler in dem vorliegenden einstufigen Verfahren um 46 % gegenüber dem Stand der Technik erhöht werden konnte, während der Aminoendgruppengehalt und damit die Anfärbbarkeit mit anionischen Farbstoffen gleichblieben und ferner das Verarbeitungsverhalten und die mechanischen Eigenschaften der Fäden sich nicht verschlechterten, sondern im Gegenteil etwas verbesserten.

Beispiel 2

Caprolactam wurde mit 0,24 Gew.-% Isophthalsäure als Kettenregler analog zu Beispiel 1 polymerisiert (s. Tab. 1). Die Temperatur der ersten Reaktionszone wurde auf 272°C eingestellt. Die übrigen Versuchsbedingungen von Beispiel 1 wurden beibehalten. Der Extraktgehalt des Produktes lag bei 12,0 %. Nach der Extraktion betrug RV: 2,56; A: 46 meq/kg und A + C: 119 meq/kg. Nach der betrieblichen Trocknung betrug RV: 2,69; A: 39 meq/kg und A + C: 107 meq/kg.

Die Verspinnung analog zu Beispiel 1 ergab eine Spulausbeute von 100 %. Zur Erzielung einer vergleichbaren Bruchdehnung wurde das Streckverhältnis auf 3,47 : 1 erhöht. Die Streckausbeute betrug 100 % und die Fadenfestigkeit 5,49 cN/dtex bei 35 % Dehnung. Die Zahl der Dickstellen (0,79/km) und der Schärfehler (0,040/100 km) war noch günstiger als in Beispiel 1 und Vergleichsbeispiel A.

Vergleichsbeispiel B

Caprolactam wurde mit 0,21 Gew.-% Adipinsäure als Kettenregler analog zu Beispiel 1 polymerisiert (s. Tab. 1). In Mol-% berechnet, war die Reglerkonzentration die gleiche wie in Beispiel 1. Zur Erzielung vergleichbarer Werte von Extraktgehalt und RV mußte der Durchsatz auf 33 kg/h reduziert werden. Der Endgruppengehalt entspricht dem von Beispiel 1.

Das Vergleichsbeispiel zeigt, daß die hier verwendete aliphatische Dicarbonsäure im Vergleich zu den erfindungsgemäßen Kettenreglern die Caprolactam-Polymerisation weniger stark beschleunigt. Die Raum-Zeit-Ausbeute war um 13 % niedriger als in Beispiel 1.

Vergleichsbeispiel C

Caprolactam wurde mit 0,25 Gew.-% Benzoesäure als Kettenregler analog zu Beispiel 1 polymerisiert (s. Tab. 2). Zur Erzielung vergleichbarer Werte von Extraktgehalt und RV mußte der Durchsatz auf 28 kg/h reduziert und die Temperatur der ersten Reaktionszone auf 279°C erhöht werden. Im übrigen wurde der Versuch wie in Beispiel 1 durchgeführt. Der Aminoendgruppengehalt lag auf demselben Niveau wie in Beispiel 1.

Das Vergleichsbeispiel zeigt, daß die gewünschten Werte von RV, Extraktgehalt und Aminoendgruppengehalt mit Benzoesäure als Kettenregler in dem vorliegenden einstufigen Verfahren nur mit erheblicher Einbuße an Raum-Zeit-Ausbeute erreicht werden konnten.

Vergleichsbeispiel D

Caprolactam wurde mit 0,09 Gew.-% Benzoesäure als Kettenregler analog zu Beispiel 1 polymerisiert (s. Tab. 2). Zur Erzielung vergleichbarer Werte von RV und Extraktgehalt wurde der Durchsatz auf 36 kg/h und die Temperatur der ersten Reaktionszone auf 268°C eingestellt. Im übrigen wurde der Versuch wie in Beispiel 1 und Vergleichsbeispiel C durchgeführt. Der Aminoendgruppengehalt betrug nach Extraktion 57 meq/kg und nach betrieblicher Trocknung 49 meq/kg.

Das Vergleichsbeispiel zeigt, daß die gewünschten Werte von RV und Extraktgehalt mit Benzoesäure als Kettenregler im Vergleich zum erfindungsgemäßen Beispiel 1 zwar fast ohne Einbuße an Raum-Zeit-Ausbeute erreicht werden konnten, das niedrige Niveau des Aminoendgruppengehalts -und damit der Anschmutzanfälligkeit - aber nicht eingehalten werden konnte.

Beispiel 3

Caprolactam wurde mit 0,50 Gew.-% Terephthalsäure als Kettenregler analog zu Beispiel 1 polymerisiert (s. Tab. 1). Der Durchsatz wurde auf 33 kg/h und die Temperatur der ersten Reaktionszone auf 278°C eingestellt. Die übrigen Versuchsbedingungen von Beispiel 1 wurden beibehalten. Das Produkt hatte einen Extraktgehalt von 11,3 %. Nach der Extraktion betrug RV: 2,35, A: 34 meq/kg und die Summe A + C: 130 meq/kg. Nach der betrieblichen Trocknung betrug RV: 2,69, A: 15 meq/kg und die Summe A + C: 96 meq/kg.

Die Verspinnung analog zu Beispiel 1 ergab eine Spulausbeute von 100 %. Zur Erzielung einer mit Beispiel 1 vergleichbaren Bruchdehnung wurde das Streckverhältnis auf 3,66 : 1 erhöht. Die Streckausbeute betrug 100 % und die Fadenfestigkeit 5,56 cN/dtex bei 34 % Bruchdehnung. Die Zahl der Dickstellen betrug 0,56/km.

Das Produkt wurde außerdem in einem einstufigen Spinn-Streck-Texturier-Prozeß zu Teppichgarn vom Titer 1300 f 68 dtex verarbeitet. Bei sehr gutem Laufverhalten wurde eine Fadenfestigkeit von 3,1 cN/dtex und eine Bruchdehnung von 45 % erzielt. Die Anfärbung mit Ortolanblau G als Testfarbstoff ergab eine gleichmäßige, praxisgerechte Farbtiefe.

Mit Terephthalsäure als Kettenregler ließ sich also ein Produkt mit sehr niedrigem Aminogruppengehalt, daher auch mit entsprechend niedriger Anschmutzbarkeit, ferner mit ausgezeichneter Verarbeitbarkeit und mit sehr guten Fasereigenschaften herstellen.

Beispiel 4

Caprolactam wurde mit 0,50 % Terephthalsäure als Kettenregler und unter Zusatz von 0,27 % einer 10 %igen wäßrigen Titandioxid-Suspension analog Beispiel 1 polymerisiert. Bei einem Durchsatz von 35 kg/h hatte das Produkt einen Extraktgehalt von 10,8 %. Nach der Extraktion betrug RV: 2,32, A: 37 meq/kg und die Summe A + C: 134 meq/kg. Nach der betrieblichen Trocknung betrug RV: 2,36; A: 33 meq/kg und die Summe A + C: 127 meq/kg. Der Gehalt an Titandioxid lag bei 0,03 %.

Das Produkt wurde nach dem Schnellspinnverfahren verarbeitet. Die Spinngeschwindigkeit war auf 4250 m/min eingestellt. Das erhaltene vororientierte Garn wurde in einem getrennten Arbeitsgang bei einem Streckverhältnis von 1,33 : 1 auf einen Titer von 44 f 13 dtex verstreckt. Beim Verstrecken wurden 1,1 Fehler pro 100 kg gefunden. Die Fadenfestigkeit betrug 4,95 cN/dtex bei einer Bruchdehnung von 35 %.

Es wurden keine Dickstellen gefunden.

Zum Vergleich wurde ein nach dem Stand der Technik mit Propionsäure kettengeregeltes Produkt gleicher relativer Viskosität und gleichen Titandioxid-Gehalts verarbeitet. Beim Verstrecken wurden 0,7 Fehler pro 100 kg gefunden. Die Festigkeit betrug 4,98 cN/dtex bei 35 % Bruchdehnung. Die Zahl der Dickstellen lag bei 13/100 km. Wie das Beispiel zeigt, ließ sich das erfindungsgemäße Produkt auch im Schnellspinnverfahren ähnlich gut verarbeiten wie ein Vergleichsprodukt des Standes der Technik.

Beispiel 5

Als Polymerisationsreaktor wurde ein VK-Rohr verwendet, dessen erste Reaktionszone nicht mechanisch durchmischt wurde. Der Reaktor hatte ein Füllvolumen von 290 l und wurde mit Wärmeträgeröl beheizt. Zur Entfernung überschüssigen Wassers wurden 2 l Stickstoff pro Stunde in der letzten Reaktionszone eingeleitet.

Geschmolzenes Caprolactam mit einem Gehalt von 1,4 Gew.-% Wasser und 0,40 Gew.-% Terephthalsäure als Kettenregler wurde dem VK-Rohr bei einem Überdruck von 0,53 bar in der ersten Reaktionszone ohne Rühren kontinuierlich zugeführt. Der Durchsatz betrug 33,3 kg/h. Die Temperatur der ersten Reaktionszone wurde auf 272°C eingestellt. Die in der zweiten Reaktionszone freiwerdende Polymerisationswärme wurde durch Kühlung mit einem innenliegenden Wärmetauscher abgeführt. Die Temperatur der dritten Reaktionszone lag bei 265°C. Das Produkt hatte einen Extraktgehalt von 11,3 %. Nach der Extraktion betrug RV: 2,40; A: 37 und die Summe A + C 130. Nach der betrieblichen Trocknung betrug RV: 2,68; A: 23 meq/kg und die Summe A + C: 102 meq/kg.

Das Produkt wurde analog Beispiel 3 durch Spinn-Streck-Texturierung mit gutem Ergebnis zu Teppichgarn vom Titer 1300 f 68 dtex verarbeitet.

Tabelle 1

| Beispiel | 1 | | 2 | | 3 |
| Vergleichsbeispiel | – | A | – | B | – |
|---|---|---|---|---|---|
| Kettenregler* | TPS | PS | IPS | ADS | TPS |
| Konzentration Gew.-% | 0,24 | 0,15 | 0,24 | 0,21 | 0,50 |
| Durchsatz kg/h | 38,1 | 26,1 | 38,2 | 33,1 | 33,3 |
| Temperatur °C | | | | | |
| erste Reaktionszone | 270 | 280 | 272 | 270 | 278 |
| letzte       " | 265 | 265 | 265 | 265 | 265 |
| Extraktgehalt Gew.-% | 11,0 | 11,8 | 12,0 | 11,3 | 11,3 |
| **Produkt nach Extraktion** | | | | | |
| Rel. Viskosität | 2,51 | 2,53 | 2,56 | 2,55 | 2,35 |
| Endgruppengehalt meq/kg | | | | | |
| Amino (A) | 46 | 43 | 46 | 46 | 34 |
| Carboxyl (C) | 77 | 57 | 73 | 74 | 96 |
| Summe A + C | 123 | 100 | 119 | 120 | 130 |
| **Produkt nach Trocknung** | | | | | |
| Rel. Viskosität | 2,72 | 2,72 | 2,69 | 2,70 | 2,69 |
| Endgruppengehalt meq/kg | | | | | |
| Amino (A) | 37 | 37 | 39 | 40 | 15 |
| Carboxyl (C) | 69 | 53 | 68 | 68 | 81 |
| Summe A + C | 106 | 90 | 107 | 108 | 96 |
| **Produkt nach Verspinnung** | | | | | |
| Spulausbeute % | 100 | 100 | 100 | 100 | 100 |
| Streckverhältnis | 3,38 | 3,38 | 3,47 | 3,38 | 3,66 |
| Streckausbeute % | 96 | 96 | 100 | 100 | 100 |

6

Tabelle 1 (Forts.)

| Beispiel | 1 | | 2 | | 3 |
|---|---|---|---|---|---|
| Vergleichsbeispiel | – | A | – | B | – |
| Fadenfestigkeit cN/dtex | 5,42 | 5,23 | 5,49 | 5,21 | 5,56 |
| Bruchdehnung % | 36 | 35 | 35 | 35 | 34 |
| Dickstellen pro km | 1,10 | 1,06 | 0,79 | 1,26 | 0,56 |
| Schärfehler pro 100 km | 0,053 | 0,067 | 0,040 | <0,01 | n.best |

*TPS = Terephthalsäure, IPS = Isophthalsäure
ADS = Adipinsäure,    PS  = Propionsäure

Tabelle 2

| Beispiel | 1** | | |
|---|---|---|---|
| Vergleichsbeispiel | – | C | D |
| Kettenregler* | TPS | BZS | BZS |
| Konzentration Gew.-% | 0,24 | 0,25 | 0,09 |
| Durchsatz kg/h | 38,1 | 28,3 | 36,1 |
| Temperatur °C | | | |
| erste Reaktionszone | 270 | 279 | 268 |
| letzte " | 265 | 265 | 265 |
| Extraktgehalt Gew.-% | 11,0 | 11,9 | 11,5 |
| Produkt nach Extraktion | | | |
| Rel. Viskosität | 2,51 | 2,53 | 2,53 |
| Endgruppengehalt meq/kg | | | |
| Amino (A) | 46 | 44 | 57 |
| Carboxyl (C) | 77 | 59 | 62 |
| Summe A + C | 123 | 103 | 119 |
| Produkt nach Trocknung | | | |
| Rel. Viskosität | 2,72 | 2,70 | 2,72 |
| Endgruppengehalt meq/kg | | | |
| Amino (A) | 37 | 37 | 49 |
| Carboxyl (C) | 69 | 54 | 55 |
| Summe A + C | 106 | 91 | 104 |

\* TPS = Terephthalsäure, BZS = Benzoesäure
\*\* Daten aus Tab. 1 übernommen

**Patentansprüche**

1. Verfahren zur kontinuierlichen Herstellung von Polycaprolactam mit geregeltem Aminoendgruppengehalt, bei dem man Caprolactam in Gegenwart von Wasser als Initiator und unter Mitverwendung von Dicarbonsäuren als Kettenregler bei einer Temperatur von 240 bis 290°C polymerisiert, dadurch gekennzeichnet, daß man Caprolactam in einer Stufe unter Zusatz von 0,3 bis 5 Gew.-% Wasser und 0,1 bis 0,6 Gew.-

% Terephthalsäure und/oder Isophthalsäure, jeweils bezogen auf Caprolactam, unter einem über die gesamte Polymerisationszeit einheitlichen Druck von 1,0 bis 1,9 bar, gemessen in der Dampfphase über der Polymerisationszone, unter Aufrechterhaltung eines Wassergehalts von 0,1 bis 0,5 Gew.-% polymerisiert, bis die Summe der Werte an Amino- und Carboxylendgruppen 115 bis 150 meq/kg beträgt, mit der Maßgabe, daß der Wert für die Aminoendgruppen 25 meq/kg, jeweils gemessen am extrahierten Polycaprolactam, nicht unterschreitet.

2. Verfahren nach Anspruch 1, dadurch gekennzeichnet, daß man in der Polycaprolactamschmelze einen Wassergehalt von 0,1 bis 0,4 Gew.-% aufrechterhält.

3. Verfahren nach den Ansprüchen 1 oder 2, dadurch gekennzeichnet, daß man 0,2 bis 0,5 Gew.-% Terephthalsäure und/oder Isophthalsäure, bezogen auf Caprolactam, zusetzt.

4. Verfahren nach den Ansprüchen 1, 2 oder 3, dadurch gekennzeichnet, daß man Caprolactam bis zu einem Aminoendgruppengehalt von 30 bis 60 meq/kg polymerisiert.


## Claims

1. A process for the continuous production of polycaprolactam having a regulated amino end group content, in which caprolactam is polymerized at 240-290°C in the presence of water as initiator and in the presence of a dicarboxylic acid as chain regulator, which comprises polymerizing caprolactam in a single stage in the presence of from 0.3 to 5% by weight of water and from 0.1 to 0.6% by weight of terephthalic acid or isophthalic acid, each percentage being based on caprolactam, at a uniform pressure throughout the entire polymerization time of from 1.0 to 1.9 bar, measured in the vapor phase above the polymerization zone, while maintaining a water content of from 0.1 to 0.5% by weight, until the sum total of the amino and carboxyl end group contents is from 115 to 150 meq/kg, with the proviso that the amino end group content does not drop below 25 meq/kg, measured on extracted polycaprolactam.

2. A process as claimed in claim 1, wherein a water content of from 0.1 to 0.4% by weight is maintained in the polycaprolactam melt.

3. A process as claimed in claim 1 or 2, wherein from 0.2 to 0.5% by weight of terephthalic acid or isophthalic acid, based on caprolactam, is added.

4. A process as claimed in claim 1 or 2 or 3, wherein the polymerization of caprolactam is carried on to an amino end group content of from 30 to 60 meq/kg.


## Revendications

1. Procédé de préparation continue du polycaprolactame à teneur en groupes amino terminaux réglée, conformément auquel on polymérise le caprolactame en présence d'eau servant d'amorceur et en recourant à l'utilisation conjointe d'acides dicarboxyliques à titre de régulateurs des chaînes, à une température de 240 à 290°C, caractérisé en ce que l'on copolymérise le caprolactame en une étape sous addition de 0,3 à 5% en poids d'eau et de 0,1 à 0,6% en poids d'acide téréphtalique et/ou d'acide isophtalique, ces proportions étant à chaque fois rapportées au caprolactame, sous une pression uniforme au cours de la période de polymérisation complète de 1,0 à 1,9 bar, mesurée dans la phase vapeur au-dessus de la zone de polymérisation, avec maintien d'une teneur en eau de 0,1 à 0,5% en poids, jusqu'à ce que la somme des valeurs en radicaux amino et carboxyle terminaux varie de 115 à 150 méq/kg et avec la condition que la valeur pour les radicaux amino terminaux ne dépasse pas 25 méq/kg, telle que chaque fois mesurée sur le polycaprolactame extrait.

2. Procédé suivant la revendication 1, caractérisé en ce que l'on maintient une teneur en eau de 0,1 à 0,4% en poids dans la masse fondue de polycaprolactame.

3. Procédé suivant la revendication 1 ou 2, caractérisé en ce que l'on ajoute 0,2 à 0,5% en poids d'acide téréphtalique et/ou d'acide isophtalique par rapport au caprolactame.

4. Procédé suivant la revendication 1, 2 ou 3, caractérisé en ce que l'on polymérise le caprolactame jusqu'à une teneur en radicaux amino terminaux de 30 à 60 méq/kg.